# EUROPEAN PATENT APPLICATION

(11) **EP 3 531 200 A1**
(43) Date of publication of application: **28.08.2019**
(21) Application number: 17862530.7
(22) Date of filing: 06.09.2017
(51) Int. Cl.: G02F 1/13357

(54) **BACKLIGHT MODULE AND LIQUID CRYSTAL DISPLAY DEVICE**

(30) Priority: 21.10.2016 CN 201610921318
(71) Applicant: Qingdao Hisense Electronics Co., Ltd., Qingdao, Shandong 266555 (CN)
(72) Inventor: LI, Fulin, Shandong 266555 (CN); SONG, Zhicheng, Shandong 266555 (CN); LIU, Zhenguo, Shandong 266555 (CN)
(74) Representative: Pfenning, Meinig & Partner mbB
(86) International application number: PCT/CN2017/100680
(87) International publication number: WO 2018/072569

(57) **Abstract**

Disclosed are an edge-lit backlight module and a liquid crystal display device, including: a light guide panel (LGP) (1); a light source component disposed at a light entrance edge of the LGP (1); an optical film (8) disposed on a light emergent edge of the LGP (1) and configured to spread light; and a reflective sheet (4) which is oppositely disposed with the optical film (8) at another edge of the LGP (1), where a bottom surface of the LGP (1) faces the reflective sheet (4), and dots are disposed on the bottom surface, where the dots include diffusion dots (6) and fluorescence excitation dots (5), where the diffusion dots (6) are disposed in a non-color-biased region of the bottom surface and the fluorescence excitation dots (5) are disposed in a color-biased region of the bottom surface, and the fluorescence excitation dots (5) are configured to receive light emitted from the light source component and produce excitation light in a predefined color, thus overcoming the inconsistency of colors in images displayed by the backlight module of the liquid crystal display device.

## Description

### CROSS-REFERENCE TO RELATED APPLICATIONS

This application claims priority to Chinese Patent Application No. 201610921318.2, filed on October 21, 2016, entitled "BACKLIGHT MODULE AND MANUFACTURING METHOD THEREOF", which is herein incorporated by reference in its entirety.

### TECHNICAL FIELD

This application relates to the technical field of display, and particularly to a backlight module and a liquid crystal display device.

### BACKGROUND

Color gamut is a method for encoding colors, and may also refer to a total collection of colors producible by a technical system. In general terms, a color gamut represents a range consisting of colors which can be presented by a given device, i.e., a range of colors that can be rendered by a screen display device, a printer, or a printing machine.

In the contemporary liquid crystal display industry, a quantum dot technology can be employed by high color gamut display. The quantum dot technology is typically applied in a way that quantum dot materials are enclosed between two films that separate the quantum dot materials from water and oxygen, and are disposed on a diffusing panel or a light guide panel. A blue light source can be used as the light source, and a quantum dot film is used as a white light conversion layer for converting the blue light into white light. Similarly, in the industry, there are also solutions in which other fluorescent materials are enclosed in optical films and disposed on a diffusing panel or a light guide panel.

### SUMMARY

In view of the above, this application provides a backlight module, including: a light guide panel (LGP); a light source component disposed at a light entrance edge of the LGP; an optical film disposed on a light emergent edge of the LGP and configured to spread light; and a reflective sheet which is oppositely disposed with the quantum dot film at another edge of the LGP, where
a bottom surface of the LGP faces the reflective sheet, and dots are disposed on the bottom surface, where the dots include diffusion dots and fluorescence excitation dots, where the diffusion dots are disposed in a non-color-biased region of the bottom surface and the fluorescence excitation dots are disposed in a color-biased region of the bottom surface, and the fluorescence excitation dots are configured to receive light emitted from the mono-color backlight source and produce excitation light in a predefined color.

This application provides a liquid crystal display device, including a liquid crystal panel, and an edge-lit backlight module, where the edge-lit backlight module is configured to illuminate the liquid crystal panel, and the edge-lit backlight module includes: a light guide panel (LGP); a light source component disposed at a light entrance edge of the LGP; an optical film disposed on a light emergent edge of the LGP and configured to spread light; and a reflective sheet which is oppositely disposed with the quantum dot film at another edge of the LGP, where
the liquid crystal panel is disposed on a light emergent edge of the optical film;
a bottom surface of the LGP faces the reflective sheet, and dots are disposed on the bottom surface, where the dots include diffusion dots and fluorescence excitation dots, where the diffusion dots are disposed in a non-color-biased region of the bottom surface and the fluorescence excitation dots are disposed in a color-biased region of the bottom surface, and the fluorescence excitation dots are configured to receive light emitted from the mono-color backlight source and produce excitation light in a predefined color.

### BRIEF DESCRIPTION OF DRAWINGS

FIG. 1A is a schematic top view illustrating a given area of a backlight module in relevant art;
FIG. 1B is a schematic side view illustrating one direction of a backlight module in relevant art;
FIG. 2A is a schematic structural view illustrating another backlight module in relevant art;
FIG. 2B is a schematic graph illustrating a Lambertian distribution for a blue light intensity in relevant art;
FIG. 2C is a schematic diagram illustrating light refraction paths for another backlight module in relevant art;
FIG. 3A is a schematic top view illustrating a backlight module proposed in this application;
FIG. 3B is a schematic side view illustrating a light guide panel in a backlight module proposed in this application;
FIG. 3C is a schematic top view illustrating a local area for dots in a backlight module proposed in this application;
FIG. 4A is a schematic structural view illustrating a backlight module proposed in an embodiment of this application;
FIG. 4B is a schematic diagram illustrating an optical path followed by the light at the edge of a backlight module proposed in an embodiment of this application; and
FIG. 4C is a schematic structural view illustrating another backlight module proposed in another embodiment of this application.

### REFERENCE SIGNS

1: LIGHT GUIDE PANEL
2: MONO COLOR BLUE LED LIGHT SOURCE
3: QUANTUM DOT FILM
4: REFLECTIVE SHEET
5: FLUORESCENCE EXCITATION DOT
6: DIFFUSION DOT
7: QUANTUM TUBE
8: OPTICAL FILM

### DETAILED DESCRIPTION

In relevant art, certain issues may present when applying backlight modules with quantum films or other fluorescent powder films. In an illustration with a blue light source as the backlight, the color of a white spot in the center region of a screen is created by mixing blue light of a small region and, red and green light of larger regions from a quantum film or a fluorescent film, where the red light and green light beyond the blue light region is excited by blue light coming from other regions. However, for a certain spot near the edge, although the blue light region may remain unchanged, the red light and green light regions, which are beyond the blue light region, may have reduced red light and green light components because the quantum film or the fluorescent film thereof may be receiving less exposure from the blue light, causing the mixed color at the spot to bias toward blue.

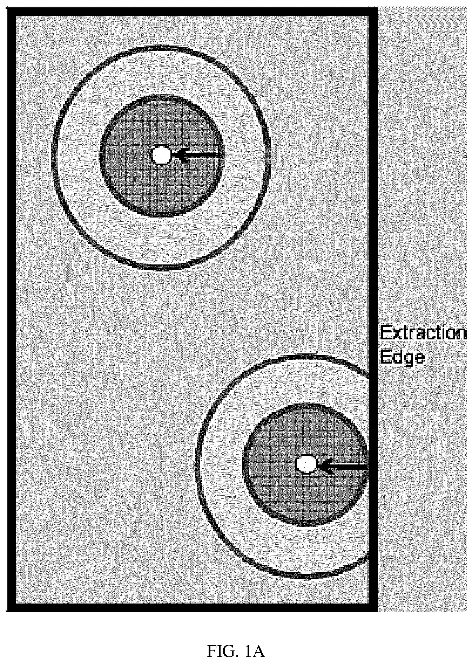

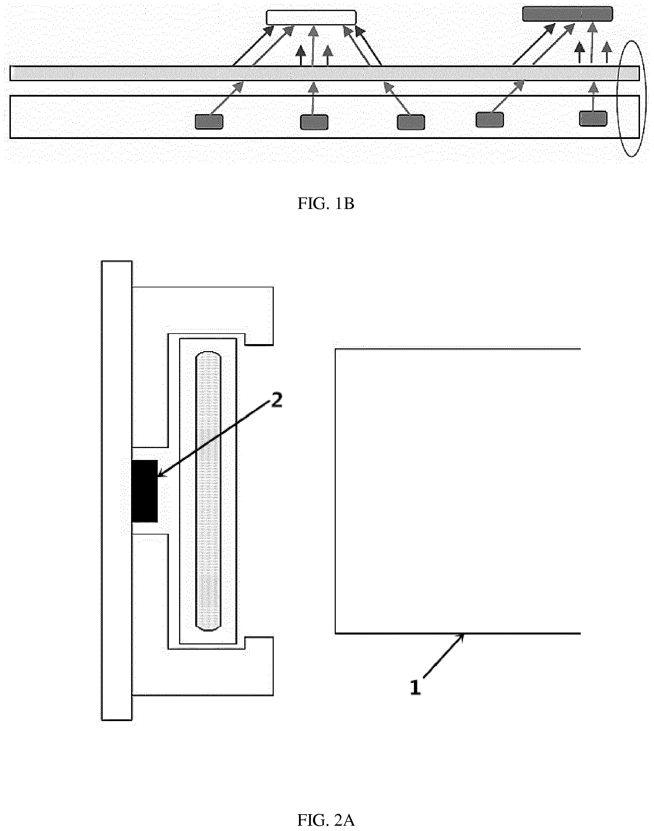

As depicted in FIGS. 1A and 1B, which are, respectively, a schematic top view and side view of a backlight module in relevant art, the right edge has no or reduced exposure to blue light, causing the quantum film to generate reduced red light and green light, and a bluish edge. Thus, there is a color inconsistency between color coordinates of the middle region and the surrounding edge, which is primarily seen as the bluish edge, compromising the perceived effect. That is, the display screen will appear bluish to various extents from the edges to the center, with locations closer to the edge more biased toward blue, while those closer to the center less biased, creating a gradual change.

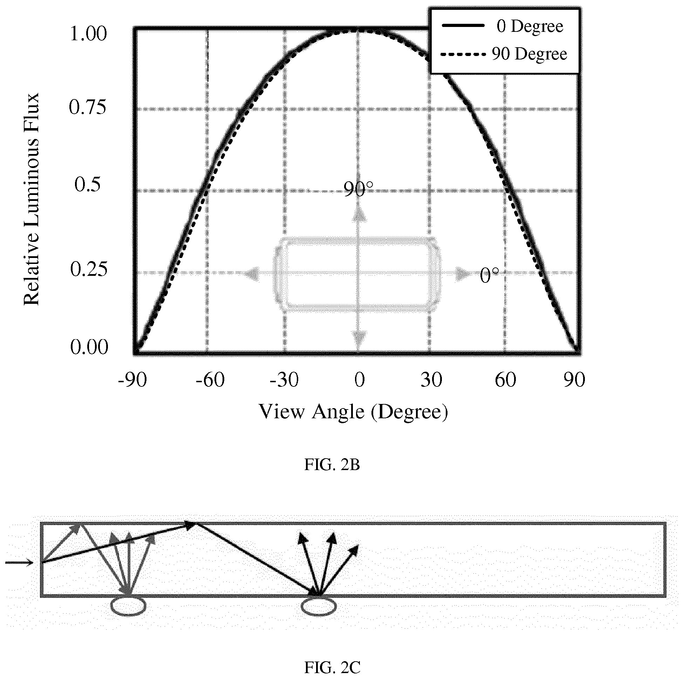

Other than this, there is another backlight module in which quantum dot materials are enclosed within a glass tube to function as a line light source, which is arranged laterally to the display screen, as illustrated in the schematic structural diagram in FIG. 2A. Since the blue light emitted by a blue light LED follows the Lambertian distribution, as depicted in FIG. 2B, more blue light photons are concentrated within a small angle. With consistent concentration distribution for quantum dot (QD) materials throughout various locations on QD layers in a QD tube, the QD layers may have consistent capacity to capture blue light photons. Thus, more blue light photons may pass through a small angle, i.e. the small angle light may have more blue light component. In this case, if the backlight module is such that light enters a light guide panel (LGP) laterally from both of the shorter edges thereof, smaller angle light will travel for a longer distance in the LGP, and will exit from a region closer to the center. Meanwhile, larger angle light will travel for a shorter distance in the LGP, and will exit from a region closer to the edge. The refraction paths are illustrated in FIG. 2C.

Based on the foregoing reasons, for an LGP with QD materials disposed laterally to a display screen, when light exits the QD tube and enters into the guide tubes, in a manner where the light enters from both sides, smaller angle light will primarily exit from the middle of the screen, while larger angle light will primarily exit from the two edges of the screen. This is shown on a liquid crystal module where the middle appears bluish while both edges appear yellowish. For a backlight module with the light entering from one side, the change of the reflection dot can make more light with a small angle exit from the light-emitting side away from the light-incident side.

In a technical solution in relevant art employing the QD film, which is generally referred to hereinafter as "QD film solution", the backlight source is a mono-color light source, e.g. in blue, and light at any spot on the screen comes from a region in the backlight module. Since the blue light is emitted separately from the red and green light, the blue light on the screen comes primarily from the blue light exiting the LGP when the LGP is exposed to the backlight source, and the red and green light come from the QD film when the film is excited by the blue light exiting the LGP. The inventor discovers that, for a specific region at the center of a liquid crystal panel, the blue light primarily comes from a first region on a QD film associated with the specific region. Due to the large diffusion angle of the light generated by a QD under excitation, the red light and green light at the specific region will, instead, be from both the first region and a second region adjacent to the first region. Thus, for an LGP of such a backlight module, white light in the specific region at the screen center is a mixture of the blue light from the first region and the red and green light from both the first and second regions on the QD film or fluorescent film, where the red and green light from the second region are produced under excitation of the blue light from the second region. Meanwhile, for a given spot near an edge, the blue light at that spot equally comes from a first region associated with the spot. However, being near the edge of the display panel, this spot may be associated with a smaller second region when compared with that for the specific region at the center. Meanwhile, for the purpose of ensuring maximum display effect, white balance needs to be secured at the center region of the display panel. Consequently, a given spot near the edge will have excessive blue light and insufficient red and green light, further aggravating the blue-bias issue at the edges around the liquid crystal panel.

There is another backlight module in relevant art, in which quantum dot materials are enclosed within a glass tube to function as a line light source. This is generally referred to hereinafter as "quantum tube solution". That is, the light source includes an LED and a quantum tube, and is disposed laterally to a display screen, where the quantum tube is located between the light source and a light entrance surface of an LGP. The inventor discovers that, since blue light emitted by a blue light LED follows Lambertian distribution, more blue light photons are concentrated within a small angle, i.e. the small angle may have more blue light components. In this case, if the backlight module is such that light enters the LGP laterally from one of the shorter edges thereof, the LGP is typically configured such that small angle light that has entered the LGP will travel for long distance therein, and will exit a light emergent surface of the LGP at a location distant from the edge of the light entrance surface, for the purpose of ensuring maximum exposure to blue light for the LGP. Smaller angle light will travel for longer distance in the LGP, and will exit the LGP at a location closer to another edge of the LGP, where the another edge means the edge of the LGP far away from the backlight source, i.e., an edge of the LGP opposite to the light entrance surface. If the module is such that light enters from both of the shorter edges, small angle light that has entered the LGP will travel for even longer distance, and will exit when closer to the center of the LGP, while large angle light that has entered the LGP will travel for shorter distance therein, and will exit when closer to the edge thereof. When these two types of light are combined, the liquid crystal module will be caused to appear like a screen that is bluish in middle regions and relatively yellowish on both edge regions. Therefore, the light exiting angle of the backlight source can cause light to bias towards blue for the part of the light emergent surface of the LGP far away from the backlight source.

Aiming at the color-biased phenomenon in the edge-lit backlight module, the present application provides a technical solution, where dots are disposed on a bottom surface of the LGP, and the LGP is partitioned into two regions, one region is a color-biased region, the color-biased region is a region in which the intensity of the light which is emitted by the light source component and received on the bottom surface of the LGP is not within a preset interval, that is, the region corresponding to the display panel with a color shift in the related art in a vertical direction, and the non-color-biased region is a region in which the intensity of the light which is emitted by the light source component and received on the bottom surface of the LGP is within the preset interval. The light of the backlight component with a intensity in the preset interval allows the liquid crystal panel to perform normal chromaticity display according to pre-designed standards without color shift. The bottom surface is further provided with dots including diffusion dots disposed in the non-color-biased region and fluorescence excitation dots disposed in the color-biased region, and the fluorescence excitation dots are configured to receive light emitted from the mono-color backlight source and produce excitation light in a predefined color. In the present application, the color-biased region may be a peripheral region of the bottom surface of the LGP. In this case, the non-color-biased region is a center region among the peripheral regions, and a distance between the non-color-biased region and the light entrance edge is smaller than a distance between the color-biased region and the light entrance edge. Illustratively, the following solutions may be included.

Aiming at the bluish phenomenon around the edges of liquid crystal panels recognized by the inventor, at this time, the light source component is a mono-color backlight source, the light source component is a mono-color backlight source, and a quantum dot film is disposed between the LGP and the optical film; where the non-color-biased region refers to a center region of the bottom surface of the LGP, and the color-biased region refers to an edge region around the bottom surface of the LGP, the edge region around the bottom surface of the LGP surrounds an exterior side of the center region. The present application provides an edge-lit backlight module, including: a light guide panel (LGP); a mono-color backlight source disposed at a light entrance edge of the LGP; a quantum dot film disposed on a light emergent surface of the LGP; and a reflective sheet which is oppositely disposed with the quantum dot film at another edge of the LGP, where a bottom surface of the LGP faces the reflective sheet, and dots are disposed on the bottom surface, where the dots include diffusion dots and fluorescence excitation dots, where the diffusion dots are disposed in a center region of the bottom surface and the fluorescence excitation dots are disposed in an edge region of the bottom surface, and the edge region surrounds the periphery of the center region, the fluorescence excitation dots are configured to receive light emitted from the mono-color backlight source and produce excitation light in a predefined color. Thus, the mono-color backlight source emits light that enters the LGP, so that the fluorescence excitation dots produce the excitation light in a predefined color, which may have a same or similar color as that of the excitation light produced by the QD film. Thus, the excitation light from the edge region of the bottom surface of the LGP can be increased, so that color can be consistently displayed for the image eventually presented by the backlight module of the liquid crystal device. Illustratively, applying a backlight module of this application to a mono-color backlight source in blue, fluorescence excitation dots may receive light emitted from a blue light source to generate yellow excitation light, which is similar to the combined effect of red light and green light produced from a QD film, so that the light exiting a light emergent surface of the QD film can form consistent white light. When used in combination with a liquid crystal panel, the bluish phenomenon around the panel edges can be solved.

Aiming at the above described phenomenon where the light biases towards blue for the part of the light emergent surface of the LGP far away from the backlight source in the quantum tube solution, at this time, the light source component includes a mono-color backlight source and a quantum tube is disposed between the LGP and the light entrance edge; a color-biased region is disposed on the bottom surface of the LGP, and a distance between the non-color-biased region and the light entrance edge is smaller than a distance between the color-biased region and the light entrance edge. When the LGP is single edge-lit, the color-biased region is disposed on the bottom surface in an edge region far away from the light entrance edge. When the LGP is double edge-lit, the LGP includes two light entrance edges opposite to each other, the color-biased region is disposed in a middle region on the bottom surface, the middle region is a close region near a symmetry axis between the two light entrance edges, and the non-color-biased region is disposed in regions other than the middle region. Illustratively, this application proposes a backlight module, including a light guide panel (LGP), a mono-color backlight source disposed at a light entrance edge of the LGP, a quantum tube disposed between the mono-color backlight source and the light entrance edge of the LGP, an optical film disposed on a light emergent surface of the LGP for spreading light, and a reflective sheet facing a bottom surface of the LGP, where dots are disposed on the bottom surface, the dots include diffusion dots and fluorescence excitation dots. The diffusion dots are less distant from the mono-color backlight source than the fluorescence excitation dots, that is, a distance between the non-color-biased region and the light entrance edge is smaller than a distance between the color-biased region and the light entrance edge. The fluorescence excitation dots are configured to receive light emitted from the mono-color backlight source and produce excitation light in a predefined color. The excitation light of predefined color may have a same or similar color as that of the excitation light produced by the quantum tube under excitation. Since the fluorescence excitation dots can receive light emitted from the mono-color backlight source and produce excitation light in a predefined color, excitation light can be increased for the regions on the bottom surface of the LGP in which the fluorescence excitation dots are disposed, so that color can be consistently displayed for the image eventually presented by the backlight module of the liquid crystal device.

Take the solution where the QD film is applied as an example, in some embodiments, this application provides a backlight module, including a light guide panel (LGP), a mono-color backlight source disposed opposite to a light entrance edge of the LGP, a quantum dot (QD) film disposed on a light emergent surface of the LGP, and a reflective sheet disposed on a bottom surface of the LGP opposite to the light emergent surface.

The LGP includes a light entrance edge, a light emergent surface, and a bottom surface. The mono-color backlight source is disposed at the light entrance edge of the LGP, and emits light that enters the light entrance edge of the LGP, be diffused by dots on the bottom surface of the LGP, be reflected by the reflective sheet, before exiting the light emergent surface of the LGP. The LGP is disposed between the QD film and the reflective sheet. The QD film is disposed opposite to the light emergent surface of the LGP, while the reflective sheet is disposed opposite to the bottom surface of the LGP. That is, the light emergent surface of the LGP faces the QD film, while the bottom surface faces the reflective sheet.

In some embodiments, the bottom surface of the LGP is partitioned into an edge region and a center region, where the edge region means regions surrounding the center region. Dots is disposed on the bottom surface of the LGP, the dots include two types:
(1) diffusion dots: disposed in the center region of the bottom surface, capable of diffusing light that has entered the light entrance edge of the LGP; and
(2) fluorescence excitation dots: disposed in the edge region in the periphery of the bottom surface, capable of receiving light emitted from the mono-color backlight source and producing excitation light in a predefined color. The excitation light produced by the fluorescence excitation dots has a color same as or similar to that produced by the QD film.

In the following, a mono-color backlight source that produces blue light will be used as an illustration in detailing a transmission process of the light emitted therefrom, which may also be referred to as "exiting light", after the light has entered the LGP from a light entrance edge thereof.

With the fluorescence excitation dots and diffusion dots on the bottom surface of the LGP, total reflection inside the LGP may be disrupted for the exiting light by these dots after the exiting light has entered the LGP from the light entrance edge thereof. Unlike existing diffusion dots which produce diffusing light in the same color as the mono-color backlight source as being subject to the exiting light, the fluorescence excitation dots in this application can receive the exiting light to produce, other than the diffusing light in the same color as the backlight source, excitation light in a predefined color. In this case, part of the blue light interacts with the dots prior to exiting from the light emergent surface of the LGP. Accordingly, another part of the blue light is converted by the fluorescence excitation dots into the excitation light in the predefined color. The excitation light may be in a color complementary to that of the mono-color backlight source, such as in yellow, and may exit from the light emergent surface of the LGP together with the diffused blue light, and be projected to the QD film. Since the fluorescence excitation dots are disposed in the edge region in the periphery of the bottom surface of the LGP, additional excitation light in the predefined color can be created in the edge region of the light emergent surface of the LGP as compared with the center regions. After entering into the QD film, such excitation light in the predefined color can desirably complement the predefined color, which may be yellow when the backlight is in blue, in the edge region of the periphery of the QD film, so that the light exiting the QD film may form consistent white light. When such white light enters the liquid crystal panel, the color seen by the user will keep consistent.

Moreover, the aforementioned mono-color backlight source functions to provide exiting light in a specified color to the LGP in the backlight module, and may be an LED light source in a single color.

In some embodiments of this application, the mono-color backlight source emits blue light, and the fluorescence excitation dots are excited to emit excitation light in a predefined color of yellow, which is similar to the excitation light of the QD film, or of red and green, which are same as that of the QD film. The fluorescence excitation dots are excited to emit red light and green light, which can be mixed to form yellow light. Here, the expression "similar" means the light created by the QD film under excitation is visually perceived as an approximation to the light emitted by the fluorescence excitation dots under excitation.

In some embodiments of this application, the mono-color backlight source emits light that, when combined with the excitation light in a predefined color, forms white light.

In some embodiments of this application, the edge region in the periphery of the bottom surface of the LGP is provided with fluorescence excitation dots, which may be dots created through ink printing, and may face the side with the reflective sheet. The material may particularly include a mixture of fluorescent powder, ink, and diffusing particles, where the fluorescent powder may include yellow fluorescent powder or a mixture of red and green fluorescent powder because the fluorescent powder primarily serves to produce excitation light in the predefined color, such as yellow light that corresponds to the blue backlight source, under excitation from the exiting light. The center region of the bottom surface of the LGP is provided with diffusion dots, which are concaves created by laser, ink printing or hot pressing, and faces the side thereof with the reflective sheet.

Based on a refraction effect of the fringe light, for the purpose of more advantageously solving the color-bias problem using the fluorescence excitation dots, one or a combination of the two following approaches may be employed in some embodiments of this application: the fluorescence excitation dots are more densely disposed when closer to the edge region of the bottom surface than when closer to the center region; and/or the fluorescence excitation dots are increased in diameter when closer to the edge region of the bottom surface than when closer to the center regions. This can increase the intensity absorbed and the amount reflected for the blue light, so that more yellow light can be created and projected to the QD film or the fluorescent powder film for exciting the complementing light.

In order to further elaborate the technical idea of this application, technical solution of this application will now be explained in conjuncture with particular application scenarios. The backlight source, the QD film, the reflective sheet, the dots, the LGP and the like are depicted in the figures in shapes and sizes that are for illustrative purpose only, rather than for limitation.

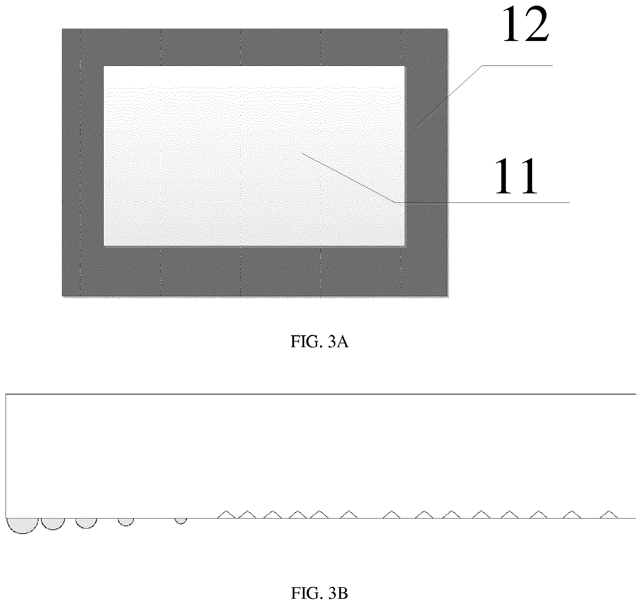

As depicted in FIG. 3A, which is a schematic top view of a backlight module proposed in this application, it can be readily seen that, this application sections a bottom surface of an LGP into two regions, i.e., a center region and an edge region. When the backlight source is a single blue LED light source, the periphery of the bottom surface is the edge region corresponding to a region where exiting light from the backlight module appears bluish, and the center region in the middle corresponds to a region where exiting light from the backlight module is in white balance. After a liquid crystal panel is mounted, the peripheral regions of the liquid crystal panel will appear bluish.

As depicted in FIG. 3B, which is a schematic side view of an LGP in a backlight module proposed in this application, the backlight source is a single blue LED light source, characterized in that the fluorescence excitation dots are created by ink printing, and particularly includes yellow fluorescent powder, or a mixture of red and green fluorescent powder, oil-based ink, and diffusing particles (Si02). As depicted in FIG. 3B, the round protrusions are fluorescence excitation dots that correspond to the edge region, and the triangular protrusions are diffusion dots that correspond to the center region.

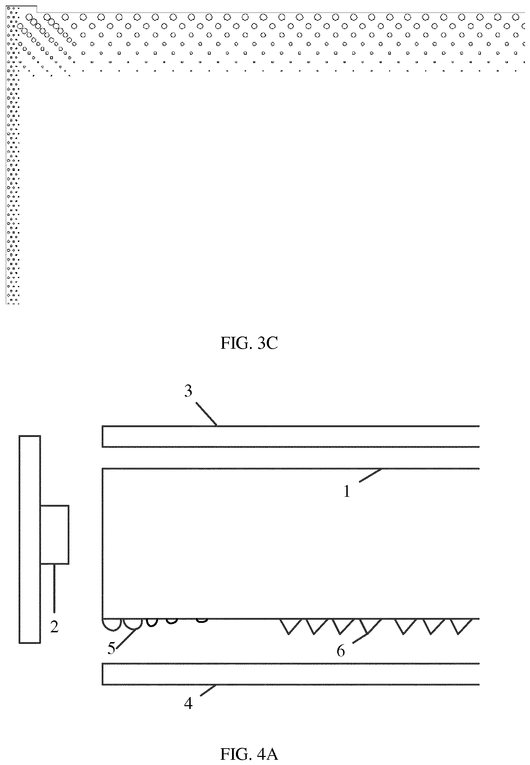

As depicted in FIG. 3C, which is a schematic top view of a local area for dots in a backlight module proposed in this application, the fluorescence excitation dots printed on the surrounding region are distributed according to a characteristics that: the dots are disposed with higher density and diameter when closers to the outer edge.

As depicted in FIG. 4A, which is a schematic structural view of a backlight module proposed in an embodiment of this application, the feature elements included therein are: an LGP 1, a single blue LED light source 2, a QD film 3, a reflective sheet 4, fluorescence excitation dots 5, and diffusion dots 6.

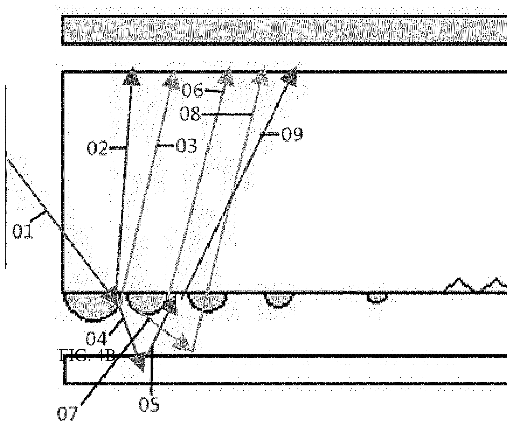

FIG. 4B is a schematic diagram illustrating an optical path followed by the light at the edge of a backlight module proposed in an embodiment of this application. In particular, Light 01 departs from the LED and enters the LGP. After the Light 01 falls on the fluorescence excitation dots, its prospective total reflection in the LGP is disrupted by the fluorescence excitation dots. Part of the light is directly diffused by the fluorescence excitation dots, creating Light 02. Since the Light 02 is resulted from a direct diffusion, none is converted to blue light. Part of the light is absorbed by the fluorescent powder in the fluorescence excitation dots, and converted to yellow Light 03 that is diffused forward, and yellow Light 07 that is diffused downward. The yellow Light 07 is reflected by the reflective sheet, creating steered Light 08. Part of the blue light is not absorbed, which creates Light 04 that is diffused downward, and then reflected by the reflective sheet, creating Light 05. The Light 05 again reaches the fluorescence excitation dots, where the light is absorbed and converted to yellow Light 06. Or, if the Light 05 does not fall on any fluorescence excitation dot, it becomes blue Light 09 that directly exits.

Thus, with a backlight module proposed in this application, fluorescence excitation dots containing fluorescent powder are printed onto surrounding edge locations, so that more blue light is converted into yellow light. Moreover, dots disposed closer to the edge of the LGP have larger diameters and greater density, causing more blue light to be absorbed and converted to yellow light, thereby effectively compensating for bluish light from the surrounding of the QD film or fluorescent powder film.

Take a solution where a quantum tube is applied as an example, this application provides an edge-lit backlight module, including a light guide panel (LGP); a mono-color backlight source, which is disposed opposite to a light entrance edge of the LGP; a quantum tube, which is disposed between the mono-color backlight source and the light entrance edge of the LGP; an optical film, which is disposed on a light emergent surface of the LGP for spreading light; and a reflective sheet, which faces a bottom surface of the LGP.

Similar to an edge-lit backlight module which takes a solution where a quantum tube is applied as an example, the LGP also includes a light entrance edge, a light emergent surface, and a bottom surface. The mono-color backlight source is disposed at the light entrance edge of the LGP, and emits light that initially enters the quantum tube, so that the quantum tube emits light that enters the light entrance edge of the LGP, be diffused or reflected by dots on the bottom surface of the LGP, and then exits the light emergent surface of the LGP. A difference though, lies in that the backlight module arranges the quantum tube between the mono-color backlight source and the light entrance edge of the LGP, thus an optical film, rather than a QD film, is disposed on the light emergent surface of the LGP. The optical film is primarily used for spreading light. The LGP is disposed between the optical film and the reflective sheet. The optical film is disposed opposite to the light emergent surface of the LGP, while the reflective sheet is disposed opposite to the bottom surface of the LGP. That is, the light emergent surface of the LGP faces the optical film, while the bottom surface faces the reflective sheet.

Compared with the aforementioned quantum tube solution, this application deploys the dots on the bottom surface of the LGP. The dots include two types: fluorescence excitation dots and diffusion dots, where the diffusion dots are less distant from the light entrance edge than the fluorescence excitation dots. The diffusion dots can diffuse light that has entered the light entrance edge of the LGP, and the fluorescence excitation dots can receive light emitted from the mono-color backlight source to produce excitation light in a predefined color. The excitation light in the predefined color may have a same or similar color as that of the excitation light produced by the quantum tube.

There are two cases according to the manner in which the light enters the LGP:

### (1) The LGP is single edge-lit

Here, the expression "single edge-lit" means the backlight source and quantum tube are disposed at only one edge of the LGP. As can be understood from the above descriptions, when the single edge-lit is the case, the small angle light will contain more blue light. As a result, the bluish phenomenon can easily occur on the edge of the screen which is opposite to the light entrance edge of the LGP. Accordingly, fluorescence excitation dots may be disposed on the bottom surface of the LGP in an edge region far away from the light entrance edge, thereby increasing excitation light for the edge region on the bottom surface of the LGP far away from the light entrance edge, so that color can be consistently displayed for the image eventually presented by the backlight module of the liquid crystal device.

For the purpose of more advantageously solving the color-bias problem using the fluorescence excitation dots, one or a combination of the two following approaches may be employed in some embodiments of this application: increasing the diameters and/or the deployment densities for the fluorescence excitation dots as their distances to the light entrance edge increase. This can increase the intensity absorbed and amount reflected for the blue light.

### (2) The LGP is double edge-lit, i.e. there are two light entrance edges

Here, the expression "double edge-lit" means the backlight source and the quantum tube are disposed at two edges of the LGP. This is when the LGP includes two opposing light entrance edges. When the double edge-lit is the case, it can be seen on the liquid crystal module that the screen is bluish in the middle region and relatively yellowish in both edge regions. Thus, the fluorescence excitation dots are disposed in a middle region of the bottom surface, the middle region is a close region near a symmetry axis between the two light entrance edges of the LGP. Meanwhile, the diffusion dots are disposed in regions other than the middle region. It should be noted that the middle region can be the region on both sides of, and within a predefined distance from, the symmetry axis. This predefined region can be configured according to the area covered by the middle region that appears bluish, so as to improve the blue-bias condition for the bluish middle region.

For the purpose of more advantageously solving the color-bias problem using the fluorescence excitation dots, one or a combination of the two following approaches may be employed in some embodiments of this application: increasing the diameters and/or the deployment densities for the fluorescence excitation dots as their distances to the symmetry axis decrease. The fluorescence excitation dots are more densely disposed, so that the intensity absorbed and amount reflected can be increased for the blue light.

Moreover, the aforementioned mono-color backlight source functions to provide exiting light in a specified color to the LGP in the backlight module, and may be an LED light source in a single color.

In some embodiments of this application, the mono-color backlight source emits blue light, and the excitation light in a predefined color is in yellow, or in red and green, which can be combined to create yellow.

In some embodiments of this application, the mono-color backlight source emits light that, when combined with the excitation light in a predefined color, forms white light.

In some embodiments of this application, the bottom surface of the LGP is provided with fluorescence excitation dots, which may be dots created through ink printing, and may face the side with the reflective sheet. The material may particularly include a mixture of fluorescent powder, ink, and diffusing particles, where the fluorescent powder may include yellow fluorescent powder or a mixture of red and green fluorescent powder because the fluorescent powder primarily serves to produce excitation light in the predefined color, such as yellow light that corresponds to the blue backlight source, under excitation from the exiting light. The bottom surface of the LGP is further provided with diffusion dots, which are concaves created by laser, ink printing or hot pressing, and face the side thereof with the reflective sheet.

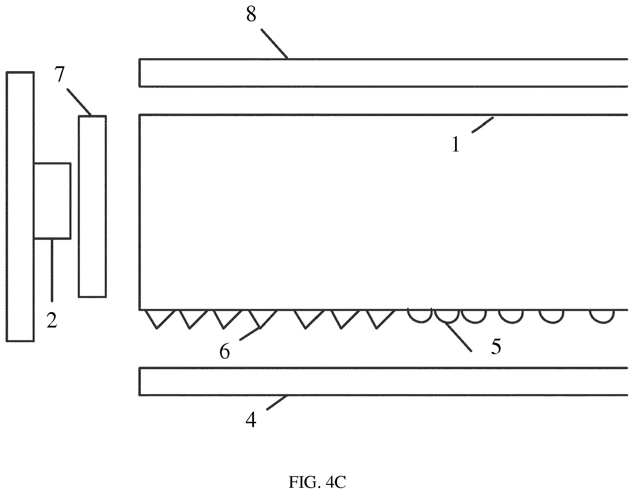

In order to further elaborate the technical idea of this application, technical solution of this application will now be explained in conjuncture with particular application scenarios. When the backlight source is a combined light source including a quantum tube and a blue LED, and light enters the LGP laterally from two shorter edges thereof, this application also provides another backlight module. As illustrated in the schematic structural diagram of FIG. 4C, the reference sign 5 indicates fluorescence excitation dots, the reference sign 6 indicates diffusion dots, the reference sign 7 indicates a quantum tube, and the reference sign 8 indicates an optical film. The fluorescence excitation dots are disposed in the middle region on the bottom surface of the LGP, and operate under the same principle as that of set forth for the LGP in the embodiments of this application.

This application also provides a liquid crystal display device, including a liquid crystal panel, and an edge-lit backlight module, where the edge-lit backlight module is configured to illuminate the liquid crystal panel, and the edge-lit backlight module includes: a light guide panel (LGP); a light source component disposed at a light entrance edge of the LGP; an optical film disposed on a light emergent edge of the LGP and configured to spread light; and a reflective sheet which is oppositely disposed with the quantum dot film at another edge of the LGP, where:
the liquid crystal panel is disposed on a light emergent edge of the optical film;
a bottom surface of the LGP faces the reflective sheet, and dots are disposed on the bottom surface, where the dots include diffusion dots and fluorescence excitation dots, where the diffusion dots are disposed in a non-color-biased region of the bottom surface and the fluorescence excitation dots are disposed in a color-biased region of the bottom surface, and the fluorescence excitation dots are configured to receive light emitted from the mono-color backlight source and produce excitation light in a predefined color.

Further, the light source component is a mono-color backlight source, and a quantum dot film is disposed between the LGP and the optical film;
where the non-color-biased region refers to a center region of the bottom surface of the LGP, and the color-biased region refers to an edge region in a periphery of the bottom surface of the LGP, the edge region in the periphery of the bottom surface of the LGP surrounds an exterior side of the center region.

Further, the mono-color backlight source emits blue light, and the excitation light in the predefined color includes yellow excitation light.

Further, the mono-color backlight source emits blue light, and the excitation light in the predefined color includes red excitation light and green excitation light.

Further, the fluorescence excitation dots are more densely disposed when closer to the edge region of the bottom surface than when closer the center regions.

Further, the fluorescence excitation dots are larger in diameter when closer to the edge region of the bottom surface than when closer to the center regions.

Further, each fluorescence excitation dot is produced from materials including: fluorescent powder, oil-based ink, and a diffusing particle.

Further, a concave is formed on each diffusion dot through laser or hot pressing.

Further, the mono-color backlight source emits light that, when combined with the excitation light in the predefined color, forms white light.

As another implementation manner, further, the light source includes a mono-color backlight source and a quantum tube disposed between the mono-color backlight source and the light entrance edge;
where a color-biased region is disposed on the bottom surface of the LGP, and a distance between the non-color-biased region and the light entrance edge is smaller than a distance between the color-biased region and the light entrance edge.

Further, when the LGP is single edge-lit, the color-biased region is disposed on the bottom surface in an edge region far away from the light entrance edge.

When the LGP is double edge-lit, the LGP includes two light entrance edges opposite to each other, the color-biased region is disposed in a middle region on the bottom surface, the middle region is a close region near a symmetry axis between the two light entrance edges, and the non-color-biased region is disposed in regions other than the middle region.

Further, where the fluorescence excitation dots are increased in diameter as distances of the fluorescence excitation dots to the symmetry axis decrease; and/or
the fluorescence excitation dots are more densely disposed as the distances of the fluorescence excitation dots to the symmetry axis decrease.

Further, the mono-color backlight source emits blue light, and the excitation light in the predefined color includes yellow excitation light.

Further, the mono-color backlight source emits blue light, and the excitation light in the predefined color includes red excitation light and green excitation light.

Further, each fluorescence excitation dot is produced from materials including: fluorescent powder, oil-based ink, and a diffusing particle.

Further, a concave is formed on each diffusion dot through laser or hot pressing.

Further, the mono-color backlight source emits light that, when combined with the excitation light in the predefined color, forms white light.

Through descriptions of the above implementation means, those of ordinary skills in the art can clearly appreciate that this application can be implemented through a hardware or a combination of software and necessary general purpose hardware platform. Based on this understanding, technical solutions of this application can be given the form of a software product that can be stored in a non-volatile storage medium (which may be a CD-ROM, an USB thumb, a portable hard drive, etc.), and includes instructions for causing a computer device (which may be a personal computer, a server, or a network device, etc.) to execute the methods described in association with various implementation scenarios of this application.

Those of ordinary skills in the art can appreciate that, the drawings attached herein are merely schematics of one of the preferred implementation scenarios, including modules or procedures that are not necessarily essential to implementing this application.

Those of ordinary skills in the art can appreciate that, a module in a device for an implementation scenario may be distributed throughout various devices for the scenario, or be alternatively located in one or more devices for some other different implementation scenarios. Various modules for the implementation scenario may be combined into a single module, or be further split into more sub-modules.

The numberings used in this application are for descriptive purposes only, and by no means indicate any preference for any implementation scenario over another.

The above disclosures are merely some particular implementation scenarios for, rather than limitations over, this application, and any variation perceivable by those of ordinary skills in the art shall fall within the protection scope of this application.

## Claims

1. An edge-lit backlight module, comprising: a light guide panel (LGP); a light source component disposed at a light entrance edge of the LGP; an optical film disposed on a light emergent edge of the LGP and configured to spread light; and a reflective sheet which is oppositely disposed with the quantum dot film at another edge of the LGP, wherein
a bottom surface of the LGP faces the reflective sheet, and dots are disposed on the bottom surface, wherein the dots comprise diffusion dots and fluorescence excitation dots, wherein the diffusion dots are disposed in a non-color-biased region of the bottom surface and the fluorescence excitation dots are disposed in a color-biased region of the bottom surface, and the fluorescence excitation dots are configured to receive light emitted from the mono-color backlight source and produce excitation light in a predefined color.

2. The edge-lit backlight module according to claim 1, wherein the light source component is a mono-color backlight source, and a quantum dot film is disposed between the LGP and the optical film;
wherein the non-color-biased region refers to a center region of the bottom surface of the LGP, and the color-biased region refers to an edge region in a periphery of the bottom surface of the LGP, the edge region in the periphery of the bottom surface of the LGP surrounds an exterior side of the center region.

3. The edge-lit backlight module according to claim 2, wherein the fluorescence excitation dots are more densely disposed when closer to the edge of the bottom surface than when closer to the center region.

4. The edge-lit backlight module according to claim 2, wherein the fluorescence excitation dots are larger in diameter when closer to the edge of the bottom surface than when closer to the center region.

5. The edge-lit backlight module according to claim 1, wherein the light source comprises a mono-color backlight source and a quantum tube disposed between the mono-color backlight source and the light entrance edge;
wherein a color-biased region is disposed on the bottom surface of the LGP, and a distance between the non-color-biased region and the light entrance edge is smaller than a distance between the color-biased region and the light entrance edge.

6. The edge-lit backlight module according to claim 5, when the LGP is single edge-lit, the color-biased region is disposed on the bottom surface in an edge region far away from the light entrance edge.

7. The edge-lit backlight module according to claim 6, wherein the fluorescence excitation dots are increased in diameter as distances of the fluorescence excitation dots to the light entrance edge increase; and/or
the fluorescence excitation dots are more densely disposed as the distances of the fluorescence excitation dots to the light entrance edge increase.

8. The edge-lit backlight module according to claim 5, wherein, when the LGP is double edge-lit, the LGP comprises two light entrance edges opposite to each other, the color-biased region is disposed in a middle region on the bottom surface, the middle region is a close region near a symmetry axis between the two light entrance edges, and the non-color-biased region is disposed in regions other than the middle region.

9. The edge-lit backlight module according to claim 8, wherein the fluorescence excitation dots are increased in diameter as distances of the fluorescence excitation dots to the symmetry axis decrease; and/or
the fluorescence excitation dots are more densely disposed as the distances of the fluorescence excitation dots to the symmetry axis decrease.

10. The edge-lit backlight module according to any one of claims 2-9, wherein the mono-color backlight source configured to emit blue light, and the excitation light in the predefined color comprises yellow excitation light.

11. The edge-lit backlight module according to any one of claims 2-9, wherein the mono-color backlight source configured to emit blue light, and the excitation light in the predefined color comprises red excitation light and green excitation light.

12. The edge-lit backlight module according to any one of claims 1-11, wherein each fluorescence excitation dot comprises: fluorescent powder, oil-based ink, and a diffusing particle.

13. The edge-lit backlight module according to claim 1, wherein the diffusion dots are concaves formed by laser or roll-stamping.

14. A liquid crystal display device, comprising a liquid crystal panel, and an edge-lit backlight module, wherein the edge-lit backlight module is configured to illuminate the liquid crystal panel, and the edge-lit backlight module comprises: a light guide panel (LGP); a light source component disposed at a light entrance edge of the LGP; an optical film disposed on a light emergent edge of the LGP and configured to spread light; and a reflective sheet which is oppositely disposed with the quantum dot film at another edge of the LGP, wherein
the liquid crystal panel is disposed on a light emergent edge of the optical film;
a bottom surface of the LGP faces the reflective sheet, and dots are disposed on the bottom surface, wherein the dots comprise diffusion dots and fluorescence excitation dots, wherein the diffusion dots are disposed in a non-color-biased region of the bottom surface and the fluorescence excitation dots are disposed in a color-biased region of the bottom surface, and the fluorescence excitation dots are configured to receive light emitted from the mono-color backlight source and produce excitation light in a predefined color.

15. The liquid crystal display device according to claim 14, wherein the light source component is a mono-color backlight source, and a quantum dot film is disposed between the LGP and the optical film;
wherein the non-color-biased region refers to a center region of the bottom surface of the LGP, and the color-biased region refers to an edge region in a periphery of the bottom surface of the LGP, the edge region in the periphery of the bottom surface of the LGP surrounds an exterior side of the center region.

16. The liquid crystal display device according to claim 15, wherein the fluorescence excitation dots are more densely disposed when closer to the edge of the bottom surface than when closer to the center region.

17. The liquid crystal display device according to claim 15, wherein the fluorescence excitation dots are larger in diameter when closer to the edge of the bottom surface than when closer to the center region.

18. The liquid crystal display device according to claim 14, wherein the light source comprises a mono-color backlight source and a quantum tube disposed between the mono-color backlight source and the light entrance edge;
wherein a color-biased region is disposed on the bottom surface of the LGP, and a distance between the non-color-biased region and the light entrance edge is smaller than a distance between the color-biased region and the light entrance edge.

19. The liquid crystal display device according to claim 18, when the LGP is single edge-lit, the color-biased region is disposed on the bottom surface in an edge region far away from the light entrance edge.

20. The liquid crystal display device according to claim 19, wherein the fluorescence excitation dots are increased in diameter as distances of the fluorescence excitation dots to the light entrance edge increase; and/or
the fluorescence excitation dots are more densely disposed as the distances of the fluorescence excitation dots to the light entrance edge increase.

21. The liquid crystal display device according to claim 18, wherein, when the LGP is double edge-lit, the LGP comprises two light entrance edges opposite to each other, the color-biased region is disposed in a middle region on the bottom surface, the middle region is a close region near a symmetry axis between the two light entrance edges, and the non-color-biased region is disposed in regions other than the middle region.

22. The liquid crystal display device according to claim 21, wherein the fluorescence excitation dots are increased in diameter as distances of the fluorescence excitation dots to the symmetry axis decrease; and/or
the fluorescence excitation dots are more densely disposed as the distances of the fluorescence excitation dots to the symmetry axis decrease.
